# EUROPEAN PATENT APPLICATION

(11) **EP 4 723 437 A1**
(43) Date of publication of application: **08.04.2026**
(21) Application number: 24819334.4
(22) Date of filing: 05.06.2024
(51) Int. Cl.: H02K 3/50

(54) **STATOR FOR MOTOR AND ELECTRIC COMPRESSOR COMPRISING SAID STATOR FOR MOTOR**

(30) Priority: 05.06.2023 JP 2023092027
(71) Applicant: Valeo Electrification, 95892 Cergy Pontoise (FR)
(72) Inventor: SAGA, Satish, Chennai, Tamil Nadu 600130 (IN); KHANCHOUL, Mohamed, 78320 Le Mesnil-Saint-Denis (FR); JAGADEESWARARAO, Charansai, Chennai, Tamil Nadu 600130 (IN); BELLET, Augustin, 78320 Le Mesnil-Saint-Denis (FR); HADAS, Rostislav, 10800 Prague (CZ)
(74) Representative: Valeo Powertrain Systems
(86) International application number: PCT/JP2024/020439
(87) International publication number: WO 2024/253106

(57) **Abstract**

[Problem] To easily hold a lead wire of a coil without increasing the dimension of the wh ole stator. [Solution] The stator (103) comprises: an insulator (120) that is provided on on e end surface (110a) of a stator core (110); a conductive wire (140) that is wound around teeth (112) of the stator core (110); and lead wires (143, 144) that are led out from the c oil (141). A first axial end surface (120b) of the insulator (120) is covered by an annular top plate (212). The lead wires (143, 144) have winding portions (143a, 144a) that are wo und in the circumferential direction on an outer peripheral surface (120d) of the insulator ( 120), and exposed portions (143b, 144b) that are exposed from the winding portions (143a, 144a) through the top plate (212). The exposed portions (143b, 144b) are held by engagi ng hooks (216, 217) of the top plate (212).

## Description

### [Technical Field]

The present invention relates to improved technology in a structure for holding lead-out wi res and neutral wires of coils of a stator in an inner rotor-type motor.

### [Background Art]

In a brushless three-phase AC motor used in an electric compressor or the like, lead-out w ires extend from both ends of coil windings of each of the three phases, and ends of the wires are connected to each other (neutral wire connection) or connected to a power sourc e terminal. Since the lead-out wires are long and flexible, if their movement is unrestricted , they may interfere with other components when the stator is assembled with the motor, o r may move to a location subject to a flow of refrigerant when the compressor is running, which could impede the flow of refrigerant, causing self-induced vibration, and this risks leading to unforeseen problems.

There is known technology, disclosed in Patent Literature 1 and 2, for protecting lead-out wires and neutral wires in stator coils.

Patent Literature 1 discloses an inner rotor-type motor for a compressor. The stator compri ses a stator core, insulators provided at both ends of the stator core, coil windings, and le ad-out wires. The lead-out wires include power supply wires connected to a power source, and neutral wires to which wires of all three phases are connected. The lead-out wires are disposed on coil windings.

In addition, the stator disclosed in Patent Literature 1 comprises lead-out wire restrictors fo r restricting the lead-out wires to ensure that they do not move from the mounting positio n. The lead-out wire restrictors are attached to an outer wall of the insulator so as to corr espond to two adjacent teeth of the stator core. The restrictors are narrow so as not to co ver slots, and therefore restrict the lead-out wires (including the power supply wires and th e neutral wires) without impeding the flow of intake refrigerant passing through the slots.

Patent Literature 2 discloses an inner rotor-type motor for a compressor. The stator compri ses a stator core, coils, an insulator, and lead-out wires extending from the coils. In additi on, a guide member having a lower plate portion, an inner wall portion and an upper plat e portion is provided on an upper face of the insulator in an axial direction. The lead-out wires leading out from the coils are circumferentially disposed in a lead-out wire accommo dating space enclosed by the lower plate portion, the inner wall portion and the upper plat e portion of the guide member, and the lead-out wires are thereby inhibited from protrudin g upward. A neutral point is fixed to the inner wall portion of the guide member by mea ns of a braid or the like.

### [Prior Art Documents]

### [Patent Literature]

[Patent Literature 1] JP 2016-192880 A
[Patent Literature 2] WO 2017-138534 A1

### [Summary of the Invention]

### [Problems to be Solved by the Invention]

The lead-out wire restrictors of Patent Literature 1 are attached in such a way as to sandw ich the outer wall of the insulator from the inside and the outside in the radial direction, t herefore requiring a predetermined radial dimension, which is an impediment to making the stator compact. Furthermore, the lead-out wire restrictors are individual components for re stricting the lead-out wires, increasing the number of components, which is undesirable fro m a component cost perspective.

In the lead-out wire holding structure of Patent Literature 2, the lead-out wire accommodat ing space is provided by the guide member on the axial direction of the coil ends, therefo re making the stator very long in the axial direction such that this holding structure cannot be adopted in an electric compressor having restrictions on the axial dimension.

The present invention has been devised in order to solve the problems above, and the obje ctive thereof lies in providing a structure for easily holding lead-out wires of coils of a st ator in an inner rotor-type motor, without increasing the dimensions of the stator overall.

### [Means for Solving the Problems]

The reference symbols used in the appended drawings are added in parentheses in the desc ription below in order to make the present invention easier to understand, but this does no t limit the present invention to the forms depicted.

The present invention provides a motor stator (103) comprising: an annular stator core (11 0) having a plurality of teeth (112) formed on a radial inner side; an annular first insulato r (120) provided on one end face (110a) of the stator core (110); an annular second insula tor (130) provided on another end face (110b) of the stator core (110); and a plurality of conducting wires (140) wound around the teeth (112) with the first and second insulators ( 120, 130) interposed,
the conducting wires (140) comprising coils (141) separately wound around the teeth (112) with concentrated windings, and a plurality of lead-out wires (143, 144) leading out from winding starts and winding ends of the coils (141), the motor stator being characterized in that
an axial first end face (120b) of the first insulator (120) is covered by an annular top plat e (212),
the lead-out wires (143, 144) comprise: wound parts (143a, 144a) which are wound in a ci rcumferential direction on an outer circumferential surface (120d) of the first insulator (120 ), and exposed parts (143b, 144b) which are exposed from the wound parts (143a, 144a) o n the opposite side of the top plate (212) to the first insulator (120), and the exposed parts (143b, 144b) of the lead-out wires (143, 144) are held by means of latc hing hooks (216, 217) integrally formed with the top plate (212).

Preferably, the motor stator (103) comprises a cover (210) attached to the first insulator (1 20), wherein the cover (210) is formed by the top plate (212), and a tubular cylindrical bo dy (211) covering the outer circumferential surface (120d) of the first insulator (120) wher e the wound parts (143a, 144a) are arranged, and the top plate (212) extends radially inwa rd from a first end (211a) of the cylindrical body (211).

Preferably, the latching hook (216) has an opening end (216c) into which the exposed part (143b) of the lead-out wire (143) is inserted, and the opening end (216c) is oriented radi ally outward of the top plate (212).

As another preferred example, the top plate (212) comprises through-holes (215, 215) penet rating in an axial direction of the top plate (212), the lead-out wires (143, 144) are inserte d through the through-holes (215, 215) and the exposed parts (143b, 144b) are exposed fro m the top plate (212), and the latching hook (216) has an opening end (216c) into which the exposed part (143b) of the lead-out wire (143) is inserted, and the opening end (216c) is oriented radially outward of the top plate (212).

As a different preferred example, the plurality of conducting wires (140) constitute multiple three-phase AC windings groups, the lead-out wires (143, 144) have a star connection, an d the wires of all three phases include neutral wires (144) connected at a neutral point (1 45) of the star connection, and the latching hook (217) is formed by a plurality of hooks (218, 219) in which orientations of opening ends (218c, 219c) into which the neutral wires (144) are inserted are opposing orientations.

The present invention also preferably provides an electric compressor (10) comprising: a m otor (100) comprising the abovementioned motor stator (103); and a compression mechanis m (50) which is driven by means of the motor (100) to compress a gas.

### [Effects of the Invention]

The present invention makes it possible to provide a structure for easily holding lead-out wires of coils of a stator in an inner rotor-type motor, without increasing the dimensions o f the stator overall.

### [Brief Description of the Drawings]

[Fig. 1] is a view in cross section of an electric compressor according to an example.
[Fig. 2] is an enlargement around a first insulator and a cluster block shown in fig. 1.
[Fig. 3] Fig. 3A is an exploded main part oblique view of a stator core and the first insul ator shown in fig. 2; and fig. 3B is an end face view of the stator core shown in fig. 3A
[Fig. 4] schematically shows a wiring structure of a plurality of conducting wires shown in fig. 3B.
[Fig. 5] is a main part oblique view of the stator core, first insulator and cluster block sh own in fig. 1.
[Fig. 6] is a view in cross section of the first insulator and a cover shown in fig. 5.
[Fig. 7] is an oblique view of a configuration in which the first insulator shown in fig. 5 is covered by the cover.
[Fig. 8] is an exploded main part enlargement of the first insulator and the cover shown i n fig. 7.
[Fig. 9] is an enlargement of a through-hole and a latching hook for latching a first lead-o ut wire shown in fig. 8.
[Fig. 10] is an enlargement of a through-hole and latching hooks for latching a second lea d-out wire shown in fig. 8.

### [Embodiments of the Invention]

Embodiments of the present invention will be described below with reference to the appen ded drawings. It should be noted that the forms depicted in the appended drawings are exa mples of the present invention, and the present invention is not limited to those forms.

### <Example>

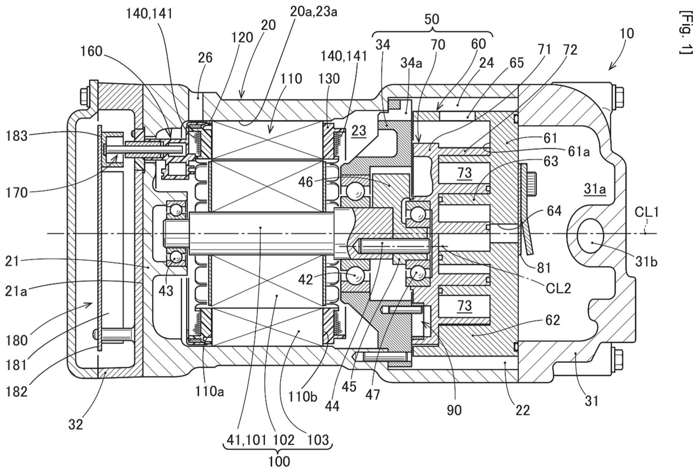

A stator 103 and an electric compressor 10 comprising the stator 103 according to an exa mple will be described with reference to fig. 1-10.

As shown in fig. 1, the electric compressor 10 is suitable for use in a refrigeration cycle employing a refrigerant as a working fluid, and is employed in the refrigeration cycle of a n automotive air conditioning device, for example. It should be noted that there is no limit ation to the purpose of use of the electric compressor 10.

The electric compressor 10 comprises, for example: a housing 20 which can be installed h orizontally; a compression mechanism 50 for compressing a gas (e.g., a gaseous refrigerant ); and a motor 100 for driving the compression mechanism 50.

The housing 20 is a bottomed cylindrical member and is closed at one end by means of a bottom wall 21 and completely open at another end. That is to say, an opening portion 2 2 is provided at the other end of the housing 20. The opening portion 22 is closed by an openable/closable head member 31. The housing 20 is constructed by a cast piece made of a metallic material such as aluminum (including aluminum alloy).

An inverter housing 32 is placed over and assembled with an outer wall surface 21a of th e bottom wall 21 of the housing 20. An inverter device 180 for supplying drive power to the motor 100 is accommodated in the inverter housing 32.

The housing 20 internally comprises a first accommodating chamber 23 on the bottom wall 21 side and a second accommodating chamber 24 on the opening portion 22 side. The fir st and second accommodating chambers 23, 24 are continuous in a longitudinal direction (a xial direction) of the housing 20. The motor 100 is housed in the first accommodating cha mber 23. The compression mechanism 50 is at least partly (e.g., completely) accommodate d in the second accommodating chamber 24.

The housing 20 further comprises an intake port 26 for taking the refrigerant into the first accommodating chamber 23 from the outside. The head member 31 comprises: a discharge chamber 31a for discharging compressed refrigerant from a compression chamber 73; an oil separation chamber 31b for separating oil from the refrigerant compressed by means of th e compression mechanism 50; and a discharge port (not depicted) for discharging to the ou tside the gaseous refrigerant from which the oil has been separated by means of the oil se paration chamber 31b.

A partition is formed between the first accommodating chamber 23 and the second accom modating chamber 24 by means of a disc-shaped partition member 34. The partition memb er 34 restricts both relative rotation and relative movement in the axial direction with resp ect to the housing 20. The first accommodating chamber 23 may also be referred to as the "low-pressure chamber 23". The partition member 34 comprises a plurality of intake holes 34a providing communication between the first accommodating chamber 23 and the secon d accommodating chamber 24. It should be noted that the partition member 34 may be co nsidered as a component of the compression mechanism 50.

A drive shaft 41 positioned on the center line CL1 in the longitudinal direction of the hou sing 20 is provided in the first accommodating chamber 23. The drive shaft 41 includes b oth a configuration in which it also serves as an output shaft 101 of the motor 100, and a configuration in which it is a separate member (not depicted) from the output shaft 101 of the motor 100. In the description given here, the drive shaft 41 is configured to also s erve as the output shaft 101 of the motor 100. The center line CL1 in the longitudinal dir ection of the housing 20 may also be referred to as the "center line CL1 of the drive shaf t 41 (output shaft 101)".

The drive shaft 41 runs through the partition member 34 from the first accommodating cha mber 23 toward the second accommodating chamber 24, and is rotatably supported by mea ns of a first bearing 42 provided in the partition member 34, and a second bearing 43 pro vided in the bottom wall 21 of the housing 20. The drive shaft 41 further comprises an e ccentric shaft 44 on one end face penetrating the partition member 34. The eccentric shaft 44 extends from one end face of the drive shaft 41 toward the compression mechanism 50 and is parallel with the drive shaft 41. A center line CL2 of the eccentric shaft 44 is off set from the center line CL1 of the drive shaft 41. An annular bush 45 is rotatably mated with the eccentric shaft 44. A counterweight 46 protruding radially from the bush 45 is int egrally provided with a portion of the bush 45.

The compression mechanism 50 comprises a pair of scroll members 60, 70 accommodated in the second accommodating chamber 24.

The fixed scroll 60 comprises a disc-shaped fixed plate 61, a cylindrical outer circumferent ial wall 62, and a spiral-shaped fixed volute wall 63. The fixed plate 61 comprises a disc harge hole 64 in a central part thereof. The outer circumferential wall 62 is a cylindrical part standing upright integrally along the whole circumference of the fixed plate 61, from an outer edge of one plate face 61a to the partition member 34 side. A refrigerant intake port 65 for taking the refrigerant from radially outward to inward is formed in the outer c ircumferential wall 62. The fixed volute wall 63 stands upright integrally from said one pl ate face 61a of the fixed plate 61 toward the partition member 34 side. The fixed scroll 6 0 is supported between the head member 31 and the partition member 34 so as to be inca pable of relative rotation, and so that the fixed plate 61 is oriented orthogonally to the ce nter line CL2 of the eccentric shaft 44.

The movable scroll 70 comprises a disc-shaped movable plate 71, and a spiral-shaped mov able volute wall 72. The outer diameter of the movable plate 71 is formed with a size tha t does not cause interference even when the movable scroll 70 orbits at a predetermined e ccentric radius inside the outer circumferential wall 62 of the fixed scroll 60. The movable volute wall 72 stands upright integrally from the movable plate 71 toward the plate face 61a of the fixed plate 61. A third bearing 47 is fitted in the center of the movable plate 71. An outer circumferential surface of the bush 45 mates with an inner circumferential su rface of the third bearing 47.

The compression mechanism 50 further comprises a rotation preventing mechanism 90 for preventing the movable scroll 70 from rotating itself.

Compression chambers 73 enclosed by the plates 61, 71 and the volute walls 63, 72 are f ormed by engagement of the fixed volute wall 63 and the movable volute wall 72.

Rotation of the drive shaft 41 enables the center of the movable scroll 70 to eccentrically rotate via the bush 45 and third bearing 47 mated with the eccentric shaft 44. That is to say, rotation of the drive shaft 41 causes the movable scroll 70 to orbit. As a result, the r efrigerant taken in from the intake port 26 passes through the gap in the motor 100 inside the low-pressure chamber 23, and is taken into the compression chambers 73 through the refrigerant intake port 65 of the fixed scroll 60 via the intake holes 34a in the partition m ember 34. As the movable scroll 70 orbits, the compression chambers 73 steadily move to ward the center while the internal volume thereof decreases. The refrigerant inside the com pression chambers 73 is compressed by this means. When the pressure inside the compress ion chambers 73 that have moved to the center rises to a pressure greater than the pressur e inside the discharge chamber 31a, a discharge valve 81 opens due to the pressure differe nce and the refrigerant inside the compression chambers 73 flows into the discharge chamb er 31a through the discharge hole 64. The refrigerant inside the discharge chamber 31a is discharged to the outside from a discharge port (not depicted) via the oil separation chamb er 31b.

As indicated above, the motor 100 is accommodated in the housing 20. The motor 100 co mprises: the output shaft 101 (drive shaft 41), a rotor 102 fixed to the output shaft 101, a nd an annular stator 103 surrounding the circumference of the rotor 102.

The rotor 102 is rotatable about a center line CL1 of the output shaft 101. The stator 103 is disposed radially outside the rotor 102 and is fixed to an inner circumferential surface 20a of the housing 20 (inner circumferential surface 23a of the first accommodating chamb er 23). For example, the stator 103 is fixed to the inner circumferential surface 20a of the housing 20 by "interference fit" mating with the inner circumferential surface 20a. A shri nk fit and a press-fit, etc. may be cited as examples of the method of interference fit.

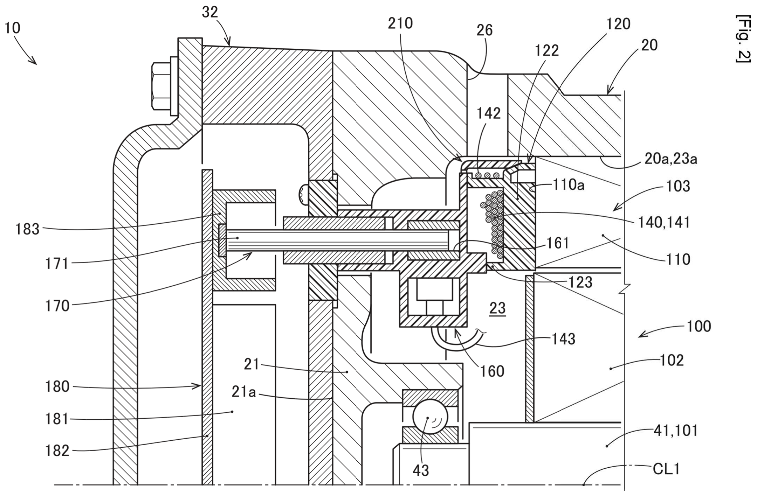

As shown in fig. 1 and 2, the stator 103 comprises: an annular stator core 110; first and second insulators 120, 130; and a plurality of conducting wires 140. The first and second insulators 120, 130 (first and second insulating bodies 120, 130) are provided at both end faces 110a, 110b of the stator core 110. The center line CL1 of the output shaft 101 may also be referred to as the "center line CL1 of the stator core 110".

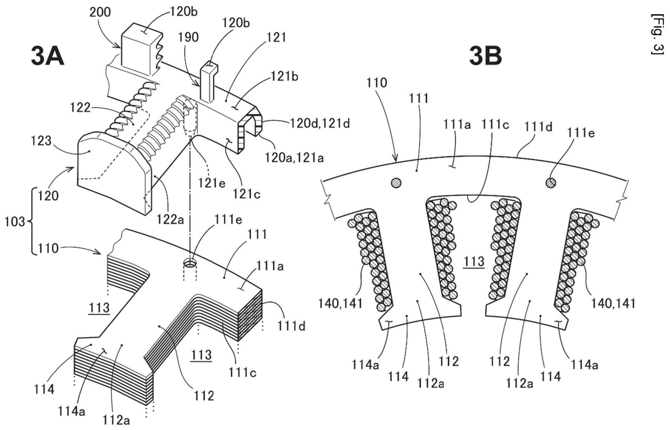

As shown in fig. 3A and 3B, the stator core 110 is formed by a laminated structure comp rising ferromagnetic plates such as magnetic steel plates. The stator core 110 comprises: a toric back yoke 111; and a plurality of teeth 112 protruding from an inner circumferential surface 111c of the back yoke 111 toward the center line CL1 of the stator core 110. The teeth 112 are arrayed at an equal pitch in the circumferential direction of the stator 103. Slots 113 are formed between teeth 112, 112 which are adjacent to each other in the circu mferential direction of the stator core 110. The teeth 112 have a teeth-side flange 114 at a free end 112a on a radially inner side. The teeth-side flanges 114 extend circumferentially so as to narrow circumferential openings of the slots 113.

The first insulator 120 is an annular member provided on the end face 110a of the stator core 110 on the inverter device 180 (see fig. 2) side, and is configured by an electrically-i nsulating resin molded part. The first insulator 120 is formed with the same shape as the stator core 110 (including the plurality of teeth 112) when the stator core 110 is viewed a long the center line CL1.

To describe this more specifically, the first insulator 120 comprises: an annular base portio n 121 lying over an axial end face 111a of the back yoke 111 of the stator core 110; an d a plurality of extensions 122 which extend radially inward from the base portion 121 an d lie over the axial end face 112a of the plurality of teeth 112.

More specifically, one end face 121a (base end face 121a) of the base portion 121 lies ov er the axial end face 111a of the back yoke 111. Said one end face 121a of the base port ion 121 is referred to as a "second end face 121a", and a face 121b on the opposite side to the second end face 121a is referred to as an "axial first end face 121b". The diameter of an inner circumferential surface 121c of the base portion 121 is set to be the same as or slightly larger than the diameter of the inner circumferential surface 111c of the back y oke 111. The diameter of an outer circumferential surface 121d of the base portion 121 is set to be the same as or slightly smaller than the diameter of an outer circumferential surf ace 111d of the back yoke 111. The outer circumferential surface 121d of the base portion 121 constitutes an outer circumferential surface 120d of the first insulator 120.

The extension 122 comprises a circumferentially-extending extension-side flange 123 at a fr ee end 122a on the radial inner side. The extension-side flange 123 lies over an axial end face 114a of the teeth-side flange 114.

A plurality of holes 111e for engaging with the first insulator 120 are further formed in t he axial end face 111a of the back yoke 111. Meanwhile, a plurality of protrusions 121e f or engaging in the holes 111e are provided in the annular base portion 121 of the first ins ulator 120. By engaging the protrusions 121e in the holes 111e, the first insulator 120 can be attached at the correct position on the axial end face 110a (see fig. 2) of the stator c ore 110.

Coils 141 of the conducting wires 140 are wound around the teeth 112 and the extensions 122. In addition, radial movement of the coils 141 is restricted by the inner circumferentia 1 surface 111c of the back yoke 111 and the inner circumferential surface 121c of the ann ular base portion 121, and by the teeth-side flange 114 and the extension-side flange 123. Moreover, an electrically insulating sheet (not depicted) may be interposed between the teet h 112 and the coils 141.

The second insulator 130 shown in fig. 1 has the same configuration as the first insulator 120, being an annular member provided on the end face 110b of the stator core 110 on th e compression mechanism 50 side, and being configured by an electrically-insulating resin molded part. The second insulator 130 is formed with the same shape as the stator core 1 10 when the stator core 110 is viewed along the center line CL1. However, the two insula tors 120, 130 may have differently shaped annular base portions 121.

In the description given below, only the first insulator 120 will be described out of the tw o insulators 120, 130. However, the shape of the extensions 122 on which the coils 141 a re wound and the shape of the extension-side flanges 123 are the same for the two insulat ors 120, 130.

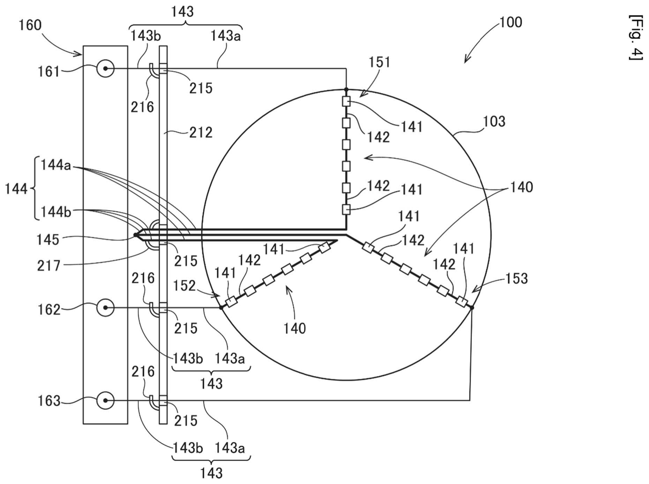

Fig. 4 schematically shows a wiring structure of the plurality of conducting wires 140 sho wn in fig. 3B. The motor 100 is configured by a three-phase AC brushless motor, for exa mple. The conducting wires 140 are wound around the plurality of teeth 112 (see fig. 3B) and constitute U phase, V phase and W phase windings groups 151-153 for three-phase alt ernating current. That is to say, there are three conducting wires 140. The conducting wire s 140 comprise, in the respective windings groups 151-153, a plurality of coils 141 (windi ngs 141) separately wound around the teeth 112 with concentrated windings, and a pluralit y of crossover wires 142 connecting the coils 141. The conducting wires 140 further comp rise a plurality of lead-out wires 143, 144 leading out from winding starts and winding en ds of the coils 141. Here, the lead-out wires 143, 144 leading out from the winding starts and winding ends of the coils 141 is the same concept as "the lead-out wires 143, 144 le ading out from winding starts and winding ends of the conducting wires 140 on the teeth 112".

All of the first and second lead-out wires 143, 144 in the multiple windings groups 151-1 53 have a star connection. The first lead-out wires 143 constitute power supply wires whic h are separately connected to three terminals 161-163 of a cluster block 160 (electrical con nector 160).

All of the second lead-out wires 144 are consolidated with each other by means of solderi ng or welding so as to be electrically conducting. A part 145 where all of the second lea d-out wires 144 are consolidated constitutes a "neutral point 145 of the star connection". E ach second lead-out wire 144 may also be referred to as a "neutral wire 144", as appropri ate.

The structure for connecting the first and second lead-out wires 143 and the inverter devic e 180 will be described here with reference to fig. 2. The first insulator 120 accommodate d in the first accommodating chamber 23 faces and is proximal to the bottom wall 21 of the housing 20.

A relay terminal 170 comprising three terminal pins 171 is provided on the bottom wall 2 1 of the housing 20. The terminal pins 171 extend along the center line CL1 of the stator core 111 from inside the housing 20 to inside the inverter housing 32. The three terminal s 161-163 (see also fig. 4) of the cluster block 160 can be mated with one end portion of each of the terminal pins 171.

The inverter device 180 comprises a board 182 on which control components 181 such as an inverter circuit are mounted, and an inverter-side connector 183 provided on the board 182. The inverter-side connector 183 is connectable to another end portion of each termina 1 pin 171.

By assembling the stator 103 inside the housing 20, the three terminals 161-163 are separa tely mated with each of the terminal pins 171. The inverter device 180 is assembled insid e the inverter housing 32, whereby the inverter-side connector 183 is connected to each ter minal pin 171. As a result, the first lead-out wires 143 are electrically connected to the in verter device 180. Driving electrical power can be supplied from the inverter device 180 t o the motor 100.

The structure for arranging the crossover wires 142 and the lead-out wires 143, 144 with r espect to the first insulator 120 will be described next.

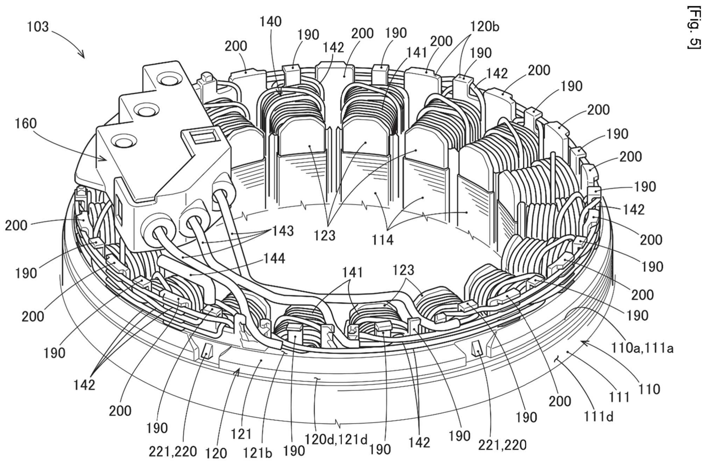

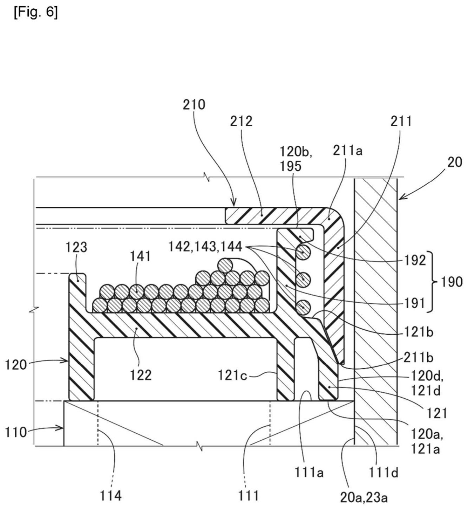

As shown in fig. 5 and 6, all of the crossover wires 142 and all of the lead-out wires 14 3, 144 are arranged along the outer circumferential surface 120d of the first insulator 120. For example, the crossover wires 142 and the lead-out wires 143, 144 are held by means of a plurality of wire holding portions 190, 200 of the first insulator 120. Referring also t o fig. 3A, the wire holding portions 190, 200 are arranged in a circumferential direction o f the base portion 121, while also extending from the axial first end face 121b of the bas e portion 121 to the inverter device 180 (see fig. 1) side, i.e., the opposite side to the sec ond end face 121a. The wire holding portions 190, 200 are integrally formed with the bas e portion 121.

The first wire holding portion 190 has an inverted L-shaped configuration when seen from the side, and comprises: a vertical plate-shaped support portion 191 extending from the firs t end face 121b of the base portion 121 to the inverter device 180 (see fig. 1) side; and a flat plate-shaped holding portion 192 extending radially outward of the base portion 121 from a tip end of the support portion 191.

End faces 195 of all of the first holding portions 190 (the faces 195 on the opposite side to the second end face 121a) are parallel to the second end face 121a of the base portion 121. Moreover, the height from the second end face 121a of the base portion 121 to the e nd faces 195 of the first holding portions 190 is the same in all cases. The end face 195 of each holding portion 190 constitutes an axial first end face 120b of the first insulator 1 20. Meanwhile, the second end face 121a of the base portion 121 constitutes an axial seco nd end face 120a of the first insulator 120.

As shown in fig. 3A and 5, the second wire holding portion 200 has an inverted L-shaped configuration when seen from the side, similarly to the first wire holding portion 190.

As shown in fig. 5 and 6, the crossover wires 142 and the lead-out wires 143, 144 being held by the respective holding portions 190, 200 are positioned radially inward of the oute r circumferential surface 120d of the first insulator 120, and are also positioned on the sta tor core 110 side of the first end face 120b of the first insulator 120.

As shown in fig. 6-8, all of the crossover wires 142 and lead-out wires 143, 144 disposed in the first insulator 120 are covered by an electrically-insulating resin cover 210, for exa mple, which is formed by an electrically insulating material. The cover 210 comprises a tu bular cylindrical body 211 covering the outer circumferential surface 120d of the first insul ator 120 where the crossover wires 142 and the lead-out wires 143, 144 are arranged. This makes it possible to prevent the crossover wires 142 and the lead-out wires 143, 144 fro m being accidentally scratched when the stator 103 having the coils 141 wound thereon is inserted into the housing 20 (see fig. 2).

The cover 210 further comprises an annular top plate 212 covering the axial first end face 120b of the first insulator 120. The top plate 212 is integrally formed with the first end face 211a of the cylindrical body 211. In other words, the cover 210 comprises the top pl ate 212 extending radially inward from a first end 211a of the cylindrical body 211 so as to cover the axial first end face 120b of the first insulator 120 That is to say, the cover 210 is formed by the cylindrical body 211 and the top plate 212.

Moreover, as shown in fig. 6, the top plate 212 covers the first end face 120b of the first insulator 120 and an outer circumferential part of the extension 122, but does not cover a part of the extension 122 radially inward from an intermediate portion thereof. That is to say, the slots 113 (see fig. 3B) of the stator core 110 are not completely covered by the t op plate 212, and there is no obstruction to the flow of refrigerant passing through the slo ts 113.

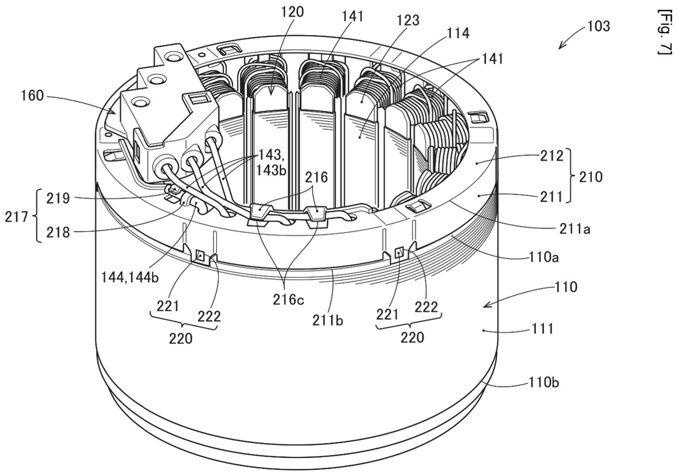

As shown in fig. 7-9, latching hooks 216, 217 protruding toward the opposite side to the first insulator 120 are formed on the top plate 212 of the cover 210. The latching hook 2 16 comprises: an upright portion 216a standing upright from the top plate 212 to a predete rmined height; and a holding portion 216b curving from an end portion of the upright port ion 216a and extending radially outward. The changeover from the upright portion 216a to the holding portion 216b may take place at a specific point, or there may be a smooth tra nsition via an arc portion. An opening is formed between the holding portion 216b and th e top plate 212 on the side of the latching hook 216 radially opposite the upright portion 216a. That is to say, the latching hook 216 is open here, and that part will also be referr ed to as an opening end 216c.

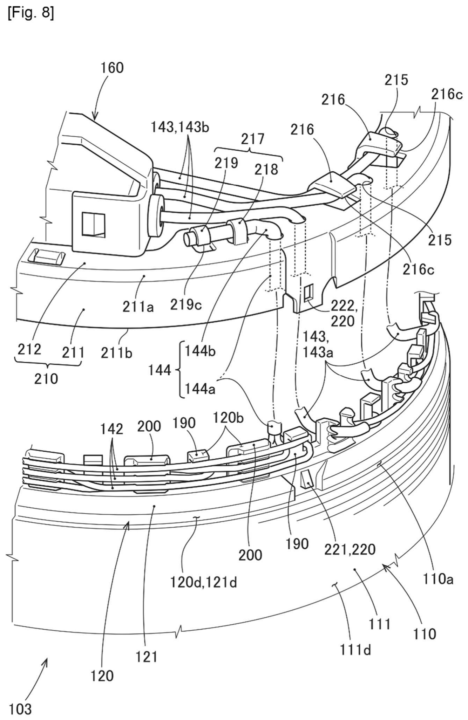

As shown in fig. 7 and 8, the cylindrical body 211 is locked to the first insulator 120 by means of a locking mechanism 220. The locking mechanism 220 is formed by mating (eng agement) of a locking projection 221 (locking hook 221) protruding radially outward from the outer circumferential surface 120d of the first insulator 120, with a locking recess 222 formed on the second end 211b side of the cylindrical body 211 of the cover 210.

To summarize the description given above, as shown in fig. 1, 3A and 3B, the motor stat or 103 comprises: an annular stator core 110 having a plurality of teeth 112 formed on a radial inner side; an annular first insulator 120 provided on one end face 110a of the stato r core 110; an annular second insulator 130 provided on another end face 110b of the stat or core 110; and a plurality of conducting wires 140 wound around the teeth 112 with the first and second insulators 120, 130 interposed. As shown in fig. 6, the axial first end fa ce 120b of the first insulator 120 is covered by the annular top plate 212.

As shown in fig. 3B and 4, the conducting wires 140 comprise coils 141 separately wound around the teeth 112 with concentrated windings, and a plurality of lead-out wires 143, 1 44 leading out from winding starts and winding ends of the coils 141.

Referring also to fig. 8, the lead-out wires 143, 144 comprise wound parts 143a, 144a; an d exposed parts 143b, 144b. The wound parts 143a, 144a are parts of the lead-out wires 1 43, 144 which are wound in a circumferential direction on the outer circumferential surface 120d of the first insulator 120. The wound parts 143a, 144a are covered by the cylindric al body 211 of the cover 210.

The exposed parts 143b, 144b are parts of the lead-out wires 143, 144 which are exposed from the wound parts 143a, 144a on the opposite side of the top plate 212 to the first ins ulator 120. The exposed parts 143b, 144b are held by means of the latching hooks 216, 2 17 which are integrally formed with the top plate 212.

The lead-out wires 143, 144 are thus wound in a circumferential direction on the outer cir cumferential surface 120d of the first insulator 120, and are also exposed from the wound parts 143a, 144a on the opposite side of the top plate 212. That is to say, the exposed pa rts 143b, 144b of the lead-out wires 143, 144 are exposed on the opposite side of the top plate 212 to the coil ends on the first insulator 120 side. The exposed parts 143b, 144b ar e held by means of the latching hooks 216, 217 which are formed on the top plate 212.

As a result, movement of the long or flexible lead-out wires 143, 144 can be restricted by the latching hooks 216, 217. The lead-out wires 143, 144 can therefore be restricted so a s not to interfere with other components when the stator 103 is assembled with the motor 100. The lead-out wires 143, 144 can further be restricted so as not to move to locations which are subject to a flow of refrigerant when the compressor 50 is running. It is possibl e to envisage a more compact stator 103 because there is no need to provide a space for fixing the lead-out wires 143, 144 either radially outside or on the axial direction side of the coil ends positioned on the first insulator 120 side. Moreover, there is no need for a d edicated component comprising a separate member in order to fix the lead-out wires 143, 144 to the top plate 212.

Additionally, the stator 103 comprises the cover 210 attached to the first insulator 120, as shown in fig. 6 and 8. The cover 210 is formed by the top plate 212, and the tubular cyl indrical body 211 covering the outer circumferential surface 120d of the first insulator 120 where the wound parts 143a, 144a are arranged. The top plate 212 extends radially inward from the first end 211a of the cylindrical body 211.

The wound parts 143a, 144a of the lead-out wires 143, 144 are thus covered by the cover 210, together with the axial first end face 120b and the outer circumferential surface 120d of the first insulator 120. Referring also to fig. 7, only the exposed parts 143b, 144b of t he lead-out wires 143, 144 are exposed from the cover 210. The wound parts 143a, 144a can therefore be easily protected simply by placing the cover 210 over the first insulator 1 20 where the wound parts 143a, 144a are arranged, and attaching the cover 210 thereto. F urthermore, movement of the long or flexible lead-out wires 143, 144 can be easily and c ompactly restricted by allowing only the exposed parts 143b, 144b to be exposed from the top plate 212 of the cover 210, and latching said exposed parts 143b, 144b with the latchi ng hooks 216, 217.

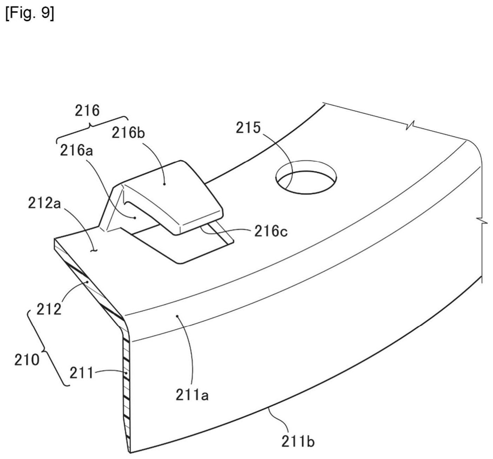

As shown in fig. 8 and 9, the latching hook 216 has the opening end 216c into which the exposed part 143b of the lead-out wire 143 (first lead-out wire 143) is inserted. The ope ning end 216c faces radially outward of the top plate 212.

The exposed part 143b of the lead-out wire 143 leads out from the outer circumferential s urface 120d side of the first insulator 120 and is therefore directed radially inward. Howev er, the upright portion 216a positioned on the radially inner side of the latching hook 216 obstructs radially inward movement of the lead-out wire 143 which has been inserted from the opening end 216c. Axial movement of the lead-out wire 143 is also obstructed by the holding portion 216b of the latching hook 216. That is to say, the latching hook 216 open s toward the opposite side to the direction in which the first lead-out wire 143 leads out, and the exposed part 143b of the first lead-out wire 143 can therefore be easily attached t o the latching hook 216, but is not readily detached from the latching hook 216 due to th e elastic force of the first lead-out wire 143 The elastic force of the first lead-out wire 14 3 itself can therefore be utilized in order to hold the first lead-out wire 143 stably in the latching hook 216.

As shown in fig. 8 and 9, the top plate 212 comprises the through-holes 215, 215 penetrat ing in the axial direction of the top plate 212. The lead-out wires 143, 144 are inserted th rough the through-holes 215, 215, and the exposed parts 143b, 144b are exposed from the top plate 212. The latching hook 216 has the opening end 216c into which the exposed pa rt 143b of the lead-out wire 143 is inserted. The opening end 216c is oriented radially out ward of the top plate 212.

By inserting the exposed parts 143b, 144b of the lead-out wires 143, 144 through the thro ugh-holes 215 in the top plate 212, the exposed parts 143b, 144b can be held in two loca tions by the through-holes 215 and the latching hook 216. The lead-out wires 143, 144 are therefore unlikely to become detached from the latching hook 216 due to the elastic force thereof. The lead-out wires 143, 144 can be stably held by the latching hook 216.

As shown in fig. 4, the plurality of conducting wires 140 constitute multiple three-phase A C windings groups. The lead-out wires 143, 144 all have a star connection, and the wires of all three phases include neutral wires 144 connected at a neutral point 145 of the star connection.

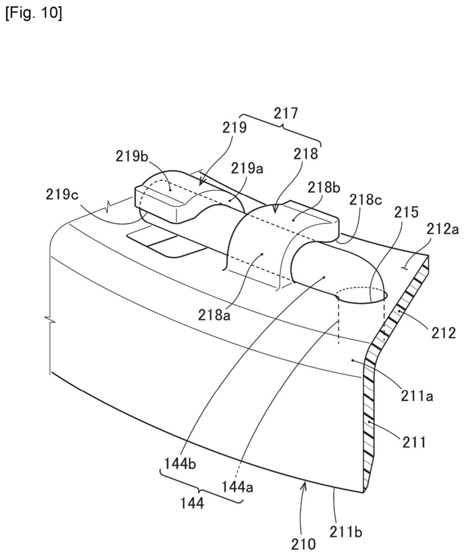

As shown in fig. 8 and 10, the latching hook 217 is formed by a plurality of hooks 218, 219. The hooks 218, 219 comprise: upright portions 218a, 219a standing upright from the top plate 212 to a predetermined height; and holding portions 218b, 219b curving from en d portions of the upright portions 218a, 219a and extending radially. The changeover from the upright portions 218a, 219a to the holding portions 218b, 219b may take place at a sp ecific point, or there may be a smooth transition via an arc portion. Openings are formed between the holding portions 218b, 219b and the top plate 212 on the side of the hooks 2 18, 219 radially opposite the upright portions 218a, 219a. That is to say, the hooks 218, 2 19 are open here, and those parts will also be referred to as opening ends 218c, 219c. Th e orientations of these opening ends 218c, 219c are opposing orientations.

The latching hook 217 is thus formed by a plurality of hooks 218, 219 in which orientatio ns of the opening ends 218c, 219c into which the neutral wires 144 are inserted are oppos ing orientations. For example, the opening end 218c of the first hook 218 is oriented radia lly inward or outward of the top plate 212. Meanwhile, the orientation of the opening end 219c of the second hook 219 is the opposite orientation to that of the opening end 218c o f the first hook 218.

The neutral wire 144 can be stably held by the latching hook 217 by utilizing the elastic force of the neutral wire 144 itself, by inserting the neutral wire 144 into the plurality of hooks 218, 219 in which orientations of the opening ends 218c, 219c are opposing orientat ions.

A summary of the description above is as follows. As shown in fig. 1 and 2, the electric compressor 10 comprises a motor 100, which comprises the stator 103 of the present inven tion, and a compression mechanism 50 which is driven by means of the motor 100 to co mpress a gas. It is therefore possible to provide an electric compressor 10 used in a refrig eration cycle with a structure for easily holding lead-out wires 143, 144 of coils 141 of a stator 103, without increasing the dimensions of the stator 103 overall.

It should be noted that the present invention is not limited to the example, provided that t he actions and effects of the present invention are demonstrated.

For example, the electric compressor 10 is not limited to a horizontal electrically-operated compressor, and it may equally be a vertical electric compressor. Furthermore, the compres sion mechanism 50 is not limited to a scroll-type compression mechanism, and may also b e a rolling piston-type compression mechanism, for example.

### [Industrial Applicability]

The electric compressor 10 comprising the motor stator 103 according to the present invent ion is suitable for use in a refrigeration cycle of a vehicle air conditioning device.

### [Key to Symbols]

- 10: Electric compressor
- 20: Housing
- 20a: Inner circumferential surface of housing
- 50: Compression mechanism
- 100: Motor
- 103: Stator
- 110: Stator core
- 110a: One end face
- 110b: Other end face
- 112: Teeth
- 120: First insulator
- 130: Second insulator
- 140: Conducting wire
- 141: Coil
- 143: First lead-out wire
- 143a: Wound part
- 143b: Exposed part
- 144: Second lead-out wire (neutral wire)
- 144a: Wound part
- 144b: Exposed part
- 145: Neutral point
- 210: Cover
- 211: Cylindrical body
- 211a: First end
- 212: Top plate
- 215: Through-hole
- 216: Latching hook
- 216c: Opening end
- 217: Latching hook
- 218: Hook
- 218c: Opening end
- 219: Hook
- 219c: Opening end
- 220: Locking mechanism

## Claims

1. A motor stator (103) comprising: an annular stator core (110) having a plurality of teeth ( 112) formed on a radial inner side;
an annular first insulator (120) provided on one end face (110a) of the stator core (110);
an annular second insulator (130) provided on another end face (110b) of the stator core ( 110); and
a plurality of conducting wires (140) wound around the teeth (112) with the first and seco nd insulators (120, 130) interposed,
the conducting wires (140) comprising coils (141) separately wound around the teeth (112) with concentrated windings, and a plurality of lead-out wires (143, 144) leading out from winding starts and winding ends of the coils (141), the motor stator being **characterized in that**
an axial first end face (120b) of the first insulator (120) is covered by an annular top plat e (212),
the lead-out wires (143, 144) comprise: wound parts (143a, 144a) which are wound in a ci rcumferential direction on an outer circumferential surface (120d) of the first insulator (120 ), and exposed parts (143b, 144b) which are exposed from the wound parts (143a, 144a) o n the opposite side of the top plate (212) to the first insulator (120), and
the exposed parts (143b, 144b) of the lead-out wires (143, 144) are held by means of latc hing hooks (216, 217) integrally formed with the top plate (212).

2. The motor stator (103) as claimed in claim 1, comprising a cover (210) attached to the fir st insulator (120), wherein
the cover (210) is formed by the top plate (212), and a tubular cylindrical body (211) cov ering the outer circumferential surface (120d) of the first insulator (120) where the wound parts (143a, 144a) are arranged, and
the top plate (212) extends radially inward from a first end (211a) of the cylindrical body (211).

3. The motor stator as claimed in claim 1, wherein the latching hook (216) has an opening e nd (216c) into which the exposed part (143b) of the lead-out wire (143) is inserted, and t he opening end (216c) is oriented radially outward of the top plate (212).

4. The motor stator as claimed in claim 1, wherein the top plate (212) comprises through-hol es (215, 215) penetrating in an axial direction of the top plate (212),
the lead-out wires (143, 144) are inserted through the through-holes (215, 215) and the ex posed parts (143b, 144b) are exposed from the top plate (212), and
the latching hook (216) has an opening end (216c) into which the exposed part (143b) of the lead-out wire (143) is inserted, and the opening end (216c) is oriented radially outward of the top plate (212).

5. The motor stator as claimed in claim 1, wherein the plurality of conducting wires (140) co nstitute multiple three-phase AC windings groups,
the lead-out wires (143, 144) have a star connection, and the wires of all three phases inc lude neutral wires (144) connected at a neutral point (145) of the star connection, and
the latching hook (217) is formed by a plurality of hooks (218, 219) in which orientations of opening ends (218c, 219c) into which the neutral wires (144) are inserted are opposing orientations.

6. An electric compressor (10) comprising: a motor (100) comprising the motor stator (103) a s claimed in any one of claims 1 to 5; and a compression mechanism (50) which is drive n by means of the motor (100) to compress a gas.
